# EUROPEAN PATENT SPECIFICATION

(11) **EP 2 501 576 B1**
(45) Date of publication and mention of the grant of the patent: **21.08.2013**
(21) Application number: 09806048.6
(22) Date of filing: 18.11.2009
(51) Int. Cl.: B60K 1/04, H01M 2/10

(54) **BATTERY TRAY FOR VEHICLE AND METHOD FOR PRODUCING THE BATTERY TRAY**
BATTERIETRÄGER FÜR EIN FAHRZEUG UND VERFAHREN ZUR HERSTELLUNG DES BATTERIETRÄGERS
SUPPORT DE BATTERIE DE VÉHICULE ET PROCÉDÉ DE FABRICATION DU SUPPORT DE BATTERIE

(43) Date of publication of application: 26.09.2012
(73) Proprietor: Benteler Aluminium Systems France SNC, 27400 Louviers (FR)
(72) Inventor: GAISNE, Denis, F-27370 Saint Ouen De Pontcheuil (FR); LECLERCQ, Jean-Philippe, F-76220 Ferrieres En Bray (FR)
(74) Representative: Cabinet Plasseraud
(86) International application number: PCT/IB2009/056011
(87) International publication number: WO 2011/061571

(56) References cited:
- EP-A1- 1 950 070
- JP-A- 2008 184 015
- US-A- 5 730 237

## Description

### FIELD OF THE DISCLOSURE

The invention relates to a battery tray for vehicle, a vehicle comprising the battery tray and a method for producing the battery tray, according to claims 1, 22 and as they are disclosed in JP 2008 184 015 A.

The battery tray is used for handling batteries into or under the vehicle body and may advantageously be removable to allow substitution of charged batteries for discharged batteries. The vehicle may be in particular a passenger car, especially an electrical car or an hybrid car.

### BACKGROUND OF THE DISCLOSURE

In prior art, it was first proposed to dispose batteries containing the electrical energy into the passenger compartment. Afterwards, in order to increase the amount of electrical energy involved in the vehicle, and therefore increase the autonomy of the vehicle, it has been contemplated to place batteries into a battery tray outside the passenger compartment. Then such a compartment is exposed to severe conditions.

It is already known a tray having a cast metal bucket and cast metal cover or a metal sheet closing the bucket. This solution is efficient and safe. But, for process and cost reasons this solution is limited to quite small trays. Furthermore, this solution does not provide a satisfying protection of the batteries in case of severe side crash and against intrusion of impacting projections.

It is also already known a tray made of assembled steel elements. But, such a solution is heavy and its high rigidity disturbs the deformation of the vehicle in case crash, in particular in case of side crash.

It is also already known a tray made of plastic material moulded over metal inserts. But, the strength of such a solution is not satisfying in case of severe crash, is expensive since it requires investments in dedicated tools and generates electro-magnetic compatibility troubles.

### SUMMARY OF THE DISCLOSURE

In case of crash, especially side crash, the structure of the vehicle has to support very large deformation which risks generating intrusion (due to components of the vehicle itself, other vehicle involved, on/off road fixed obstacles, ...) into the battery tray, deformation of the batteries and electrical short-cut. Therefore the battery tray has to keep a safe room around the batteries or to limit the impact force against the batteries.

Otherwise, when hitting a curb during car severe running conditions, the battery tray has to support large deformations due to the car energy and to prevent the batteries from deformation.

The battery tray has also to provide a watertight housing to the batteries. Therefore generation of cracks in the battery tray should be prevented to avoid in particular expositing rescuer and repairer to electrical shock and dangerous liquids.

The aim of the invention is also to improve the protection of the batteries in case of crash, to contribute to strengthen the structure of the vehicle in order to absorb the energy of the vehicle in case of crash and to reduce the weight and the cost of the battery tray.

The reduction of weight generates a reduction of the consumption of electric energy and therefore provides an extension of the driving range or enables a reduction of the electrical energy capacity which provides a cost reduction.

The invention also aims at reducing the cost in manufacturing, investment, environment and recycling.

Moreover, the invention aims at reducing the overall size of the battery tray, increasing the number of batteries contained in the tray, improving the isolation of the batteries from the surrounding (water, intrusion of impacting projections) and cooling the batteries.

According to the invention, the battery tray comprises the features of claim 1.

As such, the battery tray provides a self supporting structure able to absorb energy in case of front/rear and side crash. The frame brings strength to the battery tray and constitutes an interface with the surrounding components. The use of a profile of constant cross section enables to reduce the cost of the battery tray

According to another characteristic in accordance with the invention, preferably the profile comprises an internal wall delimiting the housing, a top wall and a bottom wall.

As such, the strength of the frame is increased and the other parts of the battery tray can be easily assembled to the frame.

In accordance with the invention, preferably the battery tray further comprises an external wall opposite the internal wall, the internal wall and the external wall being spaced apart from each other, and the battery tray further has the following features:
- each of the internal wall and the external wall has a top edge and a bottom edge,
- the top edge of the internal wall and the top edge of the external wall are connected by the top wall, and
- the bottom edge of the internal wall and the bottom edge of the external wall are connected by the bottom wall.

As such, the battery tray has a peripheral crush area, the space between the external wall and the internal wall provides a cavity in which a coolant fluid or electrical wires may be disposed and protects the inner wall, and therefore the batteries, in case of impact against the battery tray. Moreover, the two spaced apart walls provide a high strength without requiring a high weight.

According to a complementary characteristic in accordance with the invention, preferably the internal wall and the external wall of the profile are further connected by at least one cross plate extending parallel to the top wall and the bottom wall.

The strength is therefore further increased without substantially increasing the cost and the weight of the battery tray.

According to another characteristic in accordance with the invention, preferably the profile has a closed cross section.

As such, the rigidity of the profile and the watertightness of the battery tray is further increased.

According to another characteristic in accordance with the invention, preferably the profile comprises at least one bent portion

Therefore, the manufacturing of the frame requires few operations and provide a great flexibility in the process.

According to a complementary characteristic in accordance with the invention, preferably the profile is made (in one piece) of a single unit (advantageously get from extrusion) and has a first end and a second end fixed one to the other.

As such, the strength of the battery tray is further increased, the manufacturing of the frame requires still few operations and the cost is still reduced.

According to another characteristic in accordance with the invention, preferably the profile comprises at least two portions, each portion has at least one bevelled end, said bevelled ends being directly fixed one to the other.

As such, the cost of the battery tray is reduced.

In accordance with the invention, preferably the profile comprises:
- two rectilinear longitudinal portions extending in a longitudinal direction, and
- two lateral portions extending between the longitudinal portions.

As such, the strength of the vehicle is increased and the cost of the structural battery tray is reduced.

According to another complementary characteristic, preferably the battery tray further comprises cross members extending between the longitudinal portions of the profile.

As such, the strength of the battery tray is further increased.

According to another characteristic in accordance with the invention, preferably said profile defines a first profile and the frame further comprises a second profile of substantially constant cross section, and the first profile and the second profile are entirely superposed one on the other.

As such, the mounting and the watertightness are easier to achieve and the cost is reduced.

In accordance with the invention, in alternative the battery tray preferably further has the following characteristic:
- said profile defines a first profile and the frame further comprises a second profile of substantially constant cross section,
- the first profile and the second profile are disposed on different sides of a junction plane,
- the roof comprises a first portion extending between the two profiles in the junction plane and a second portion extending in an upper plane parallel to the junction plane,
- the second profile is disposed between the upper plan and the junction plane.

Therefore, the height of the battery tray is adjusted according to the space available and all the batteries can be placed in the same housing.

In accordance with the invention, the battery tray preferably further has the complementary following characteristic:
- the first profile comprises a first rectilinear longitudinal portion and a second rectilinear longitudinal portion both extending in a longitudinal direction and, a first lateral portion and a second lateral portion connecting the longitudinal portions,
- the second profile comprises a first rectilinear longitudinal portion and a second rectilinear longitudinal portion both extending in the longitudinal direction, and two lateral portions connecting the longitudinal portions,
- the first longitudinal portion of the first profile and the first longitudinal portion of the second profile are superposed and fixed to each other,
- the second longitudinal portion of the first profile and the second longitudinal portion of the second profile are superposed and fixed to each other,
- the first lateral portion of the second profile is spaced apart from the first lateral portion of the first profile and the first portion of the roof extends between the first lateral portion of the first profile and the first lateral portion of the second profile.

As such the battery tray is simple and has a high strength.

According to another characteristic in accordance with the invention, preferably the battery tray comprises:
- a bucket including the profile and the floor, the profile comprising a first peripheral junction flange, and
- a cover including the roof, the cover comprising a second peripheral junction flange, the first peripheral junction flange and the second peripheral junction flange being sealingly connected together.

This solution provides simply a watertight housing easy to fill with batteries.

According to another characteristic in accordance with the invention, preferably the floor comprises an internal wall and an external wall spaced apart from each other and fixed to each other at a plurality of locations spaced from the periphery of the internal wall and from the periphery of the external wall.

As such, the compression resistance in case of side crash and the support of the batteries are increased. Moreover, this solution increase the thermal insulation of the housing when needed by the batteries contained in the housing and provides room for circulation of cooling fluid for cooling the housing. Furthermore, the protection of the batteries in case of shock is further improved.

According to a complementary characteristic in accordance with the invention, preferably the floor comprises a plurality of hollow battens assembled side by side.

As such, the compression strength of the floor is increased.

According to another characteristic in accordance with the invention, preferably the floor has an external surface which is flat.

As such, the risk of hitching with an obstacle is reduced.

According to another characteristic in accordance with the invention, preferably the frame is in aluminium.

As such, the strength and the ductility of the battery tray is increased and the weight of the battery tray is reduced.

According to another characteristic in accordance with the invention, preferably the housing defined by the frame, the floor and the roof is watertight.

The invention also deals with an assembly comprising the battery tray and batteries disposed in the housing of the battery tray.

The deformation of the housing is prevented in order to protect the batteries by the high resistance of the frame, advantageously by the high resistance of the floor and optionally also by the high resistance of the roof.

The invention further deals with a vehicle comprising a structure and the battery tray. According to the invention, the vehicle further comprises two extruded hollow side members having a constant cross section adapted to absorb energy in case of crash, and the battery tray is fixed to the structure of the vehicle through the side members.

The side members absorb at least part of the energy of the vehicle in case of crash in order to further protect the batteries.

The invention further deals with a method for producing a battery tray for vehicle. According to the invention, the method comprises the steps of claim 22.

As such, the battery tray provides a high protection to the batteries and the cost for producing the battery tray is contained.

In accordance with the invention, the method preferably further has the complementary characteristics:
- during step a) the profile is cut at a first end and a second end, and
- during step b) the profile is bent to create a single unit of closed shape and the first and the second end are fixed one to the other.

In accordance with invention, the method may preferably have the alternative characteristics:
- during step a) two rectilinear longitudinal portions and two lateral portion having bevelled ends are cut, and
- during step b) the bevelled ends of the lateral portions are fixed with the bevelled ends of the longitudinal portions.

### BRIEF DESCRIPTION OF THE DRAWINGS

Other characteristics and advantages of this invention shall appear in the following detailed description, in reference to the annexed drawings wherein:
- figure 1 is schematic view of a vehicle comprising a battery tray in accordance with the invention,
- figure 2 is an exploded perspective view of a first embodiment of battery tray,
- figure 3 is an exploded perspective view of the first embodiment of battery tray cut along line referenced III-III in figure 2,
- figure 4 is an exploded perspective view of a second embodiment of battery tray in accordance with the invention,
- figure 5 is an exploded perspective view of a third embodiment of battery tray in accordance with the invention,
- figure 6 is an exploded perspective view of a fourth embodiment of battery tray in accordance with the invention,
- figure 7 is an exploded perspective view of a fifth embodiment of battery tray in accordance with the invention,
- figure 8 is a perspective view of a sixth embodiment of battery tray in accordance with the invention,
- figure 9 is a partial perspective view at greater scale of the sixth embodiment of battery tray cut along line referenced IX-IX in figure 8.

### DETAILED DESCRIPTION

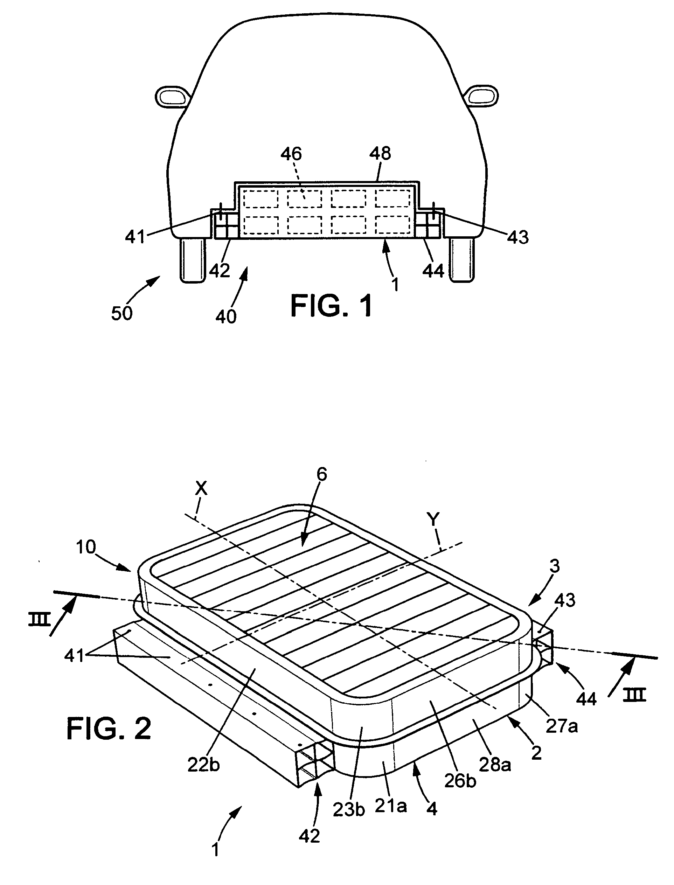

Figure 1 shows a vehicle 50 having a structure, in particular a chassis 48, and an assembly 40 fixed to the structure 48. The assembly 40 comprises a battery tray 1 and two side members 42, 44. The battery tray 1 has a housing 8 containing batteries 46. Preferably, the housing 8 is watertight and the battery tray has a structural function, constituting therefore a structural battery tray 1. The structural battery tray 1 is fixed to the chassis 48 of the vehicle 50 through the side members 42, 44.

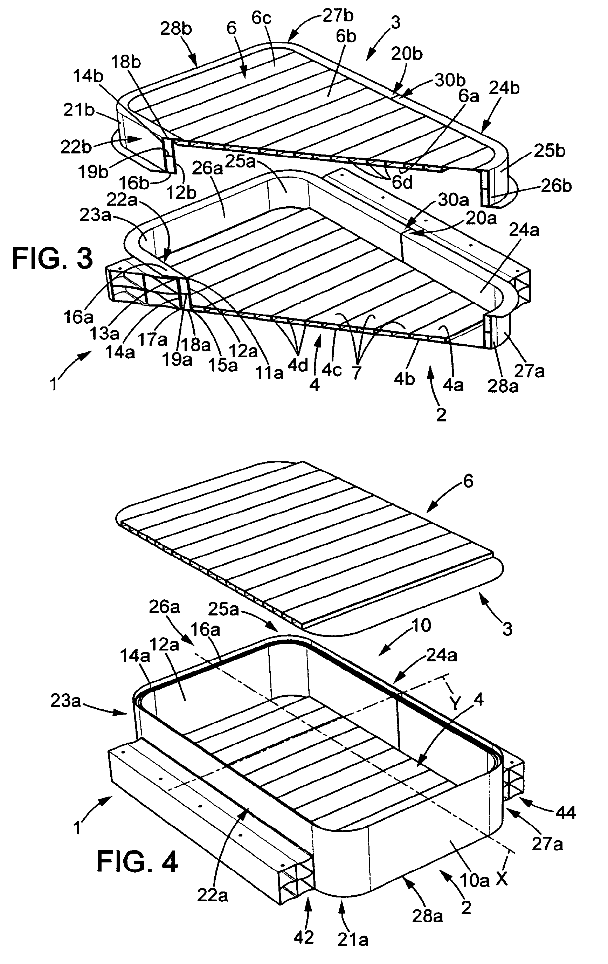

The figure 2 and the figure 3 show a first embodiment of the assembly 40. The structural battery tray 1 comprises a bucket 2 and a cover 3. The bucket 2 and the cover 3 define the housing 8 containing the batteries 46.

The bucket 2 comprises a first profile 10a and a floor 4 which is a (separate) part different from the first profile 10a and fixed on the first profile 10a. The main part of the bucket 2 consists in the first profile 10a constituting a first portion of a frame 10 of the structural battery tray 1, the frame being peripheral. Preferably, the first profile 10a has a constant hollow section, is made in aluminium and is made out by extrusion.

The first profile 10a has a first end 20a and a second end 30a. The first profile 10a constitutes a single unit obtained from extrusion. The first profile 10a is bent after extrusion so that it have an annular closed shape after fixing the first end 20a and the second end 30a together, preferably by welding. Thus the first profile 10a comprises two rectilinear longitudinal portions 22a, 24a extending in a longitudinal direction X, two rectilinear lateral portions 26a, 28a extending in a lateral direction Y perpendicular to the longitudinal direction X and four intermediate bent portions 21a, 23a, 25a, 27a connecting the lateral portions 26a, 28a with the longitudinal portions 22a, 24a. Each bent portions 21a, 23a, 25a, 27a has the shape of a quarter of circle and the first profile 10a has a substantially rectangular shape.

The first profile 10a is made in one piece from extrusion and comprises in cross section an internal wall 12a, an external wall 14a, a top wall 16a, a bottom wall 18a and a cross plate 19a. Preferably, each of the internal wall 12a, the external wall 14a, the top wall 16a, the bottom wall 18a and the cross plate 19a is plain. The internal wall 12a delimits the housing 8. The external wall 14a is opposite the internal wall 12a and has the same height as the internal wall 12a.

The top wall 16a extends between a top edge 11a of the internal wall 12a and a top edge 13a of the external wall 14a. Moreover, the top wall 16a extends beyond the external wall 14a and protrudes from the external wall 14a, so as to constitute a junction flange.

The bottom wall 18a extends between a bottom edge 15a of the internal wall 12a and a bottom edge 17a of the external wall 14a. Moreover, the bottom wall 18a extends beyond the internal wall 12a and protrudes from the internal wall 12a, so as to constitute a support flange.

The cross plate 19a is parallel to the top wall 16a and the bottom wall 18a and is substantially at the same distance from the top wall 16a and from the bottom wall 18a.

The floor 4 is substantially plan and is supported by the protrusion constituted by the bottom wall 18a of the first profile 10a. The floor 4 is secured to the profile 10b by welding or self riveting piercing, riveting, self screw piercing joining, structural gluing or the like. A continuous sealing joint extends between the floor 4 and the first profile 10a.

The floor 4 comprises an internal wall 4a and an external wall 4b spaced apart from each other. The external wall 4b has an underside surface 4c with is flat. In the embodiment illustrated in figures 2 and 3, the floor 4 comprises a plurality of battens 7 assembled side by side. Each batten is made out by extrusion, preferably extrusion of aluminium, extends along the lateral direction Y, comprises a top wall which constitutes a part of the internal wall 4a, a bottom wall which constitutes a part of the external wall 4b, two side walls which connect the top wall to the bottom wall and a spacer, the spacer being parallel to the side walls and also connecting the top wall to the bottom wall. Therefore the cross section of the battens is quite close to the cross section of the profile 10a. The side walls and the spacer of each batten provide a plurality of connections 4d between the internal wall 4a and the external wall 4b at locations spaced from the periphery of the internal wall 4a and the periphery of the external wall 4b.

The battens 7 are crimped together. The junction between the battens is watertight and may comprise a sealing joint.

In an alternative embodiment the battens could extend along the longitudinal direction X.

In the embodiment illustrated in figures 2 and 3, the cover 3 is identical to the bucket 2.

The cover 3 comprises a second profile 10b and a roof 6 which is a (separate) part different from the second profile 10b and fixed on the second profile 10b. The external wall 6b has an upper surface 6c with is flat. The second profile 10b constitutes a second portion of the frame 10 of the structural battery tray 1. The second profile 10b is made out of a peripheral constant hollow section by aluminium extrusion.

The second profile 10b has a first end 20b and a second end 30b. The second profile constitutes a single unit. It is bent so that it is closed on itself and the first end 20b and the second end 30b are fixed together, preferably by welding. The second profile 10b comprises two rectilinear longitudinal portions 22b, 24b extending in the longitudinal direction X, two rectilinear lateral portions 26b, 28b extending in the lateral direction Y and four bent portions 21b, 23b, 25b, 27b connecting the lateral portions 26b, 28b with the longitudinal portions 22b, 24b. Each bent portion 21b, 23b, 25b, 27b has the shape of quarter of circle and the second profile 10b has a substantially rectangular shape.

The second profile 10b comprises in cross section an internal wall 12b, an external wall 14b, a bottom wall 16b, a top wall 18b and a cross plate 19b. The internal wall 12b delimits the housing 8. The external wall 14b is opposite the internal wall 12b and has the same height as the internal wall 12b.

The bottom wall 16b extends beyond the external wall 14b and protrudes from the external wall 14b, so as to constitute a junction flange.

The top wall 18b extends beyond the internal wall 12b and protrudes from the internal wall 12b, so as to constitute a support flange.

The cross plate 19b is parallel to the bottom wall 16b and the top wall 18b and is substantially at the same distance from the bottom wall 16b and from the top wall 18b.

The roof 6 is substantially plan and is secured to the protrusion constituted by the top wall 18b of the profile 10b by welding or self riveting piercing, riveting, self screw piercing joining or the like. The roof 6 comprises an internal wall 6a and an external wall 6b spaced apart from each other. In the embodiment illustrated in figures 2 and 3, the roof 6 comprises a plurality of battens identical to that of the floor 4. Each batten is made out by extrusion, preferably extrusion of aluminium, extends along the lateral direction Y, comprises a bottom wall which constitutes a part of the internal wall 6a, a top wall which constitutes a part of the external wall 6b, two side walls which connect the internal wall 6a to the external wall 6b and a spacer, the spacer being parallel to the side walls and also connecting the internal wall 6a to the external wall 6b. The side walls and the spacer of each batten provide a plurality of connections 6d between the internal wall 6a and the external wall 6b at locations spaced from the periphery of the internal wall 6a and the periphery of the external wall 6b. In an alternative embodiment the roof 6 could be made of two sheets forming the internal wall 6a and the external wall 6b and fixed one to the other, preferably by spot welding, in a plurality of locations regularly spaced one to the other.

In another alternative embodiment, the roof 6 could comprise a metal sheet, a plastic sheet, plastic battens or the like instead of the metal battens.

A continuous sealing joint extends between the roof 6 and the profile 10b.

As illustrated in figure 2, the top wall 16a of the first profile 10a and the bottom wall 16b of the second profile 10b are fixed one to the other. Therefore the first profile 10a and the second profile 10b define together the frame of the structural battery tray 1.

Preferably a sealing joint is disposed between the top wall 16a of the first profile 10a and the bottom wall 16b of the second profile 10b. The housing 8 delimited by the floor 4, the roof 6 and the internal wall 12a, 12b of the first profile 10a and the second profile 10b (the internal wall of the frame) is watertight. Otherwise, the housing 8 has to be incompressible in order to protect the batteries.

The side member 42 is fixed to the longitudinal portion 22a of the first profile 10a and the side member 44 is fixed to the longitudinal portion 24a of the first profile 10a.

The side members 42, 44 have fixing holes 41, 43 for removably fixing the side members 42, 44 to the structure 48 of the vehicle 50, preferably with bolts. Therefore, the structural battery tray 1 is fixed to the structure 48 of the vehicle 50 through the side members 42, 44. In an alternative embodiment the structural battery tray could be fixed directly to the chassis 48.

The side members 42, 44 are profiles extending along the longitudinal direction and made out by extrusion. The side members 42, 44 are able to absorb energy by crushing perpendicularly to the longitudinal direction. Each side member has in cross section substantially a square external shape defined by two pairs of opposite sides. Each side member 42, 44 further has two pairs of spacers forming a cross and extending at equal distance to the corresponding opposite sides. In order to improve absorption of energy in case of crash, the sides and the spacers are undulated.

The second embodiment illustrated in figure 4 differs from the first embodiment illustrated in figures 2 and 3 in that the cover 3 is deprived of the second profile and only comprises the roof 6. Therefore the frame 10 comprises only the profile 10a.

Moreover, the top wall 16a of the profile 10a extends only between the internal wall 12a and the external wall 14a whereas the external wall 14a extends beyond the top wall 16a and protrudes from the top wall 16a. Therefore, the roof 6 is supported by the top wall 16a and surrounded by the protrusion of the external wall 14a.

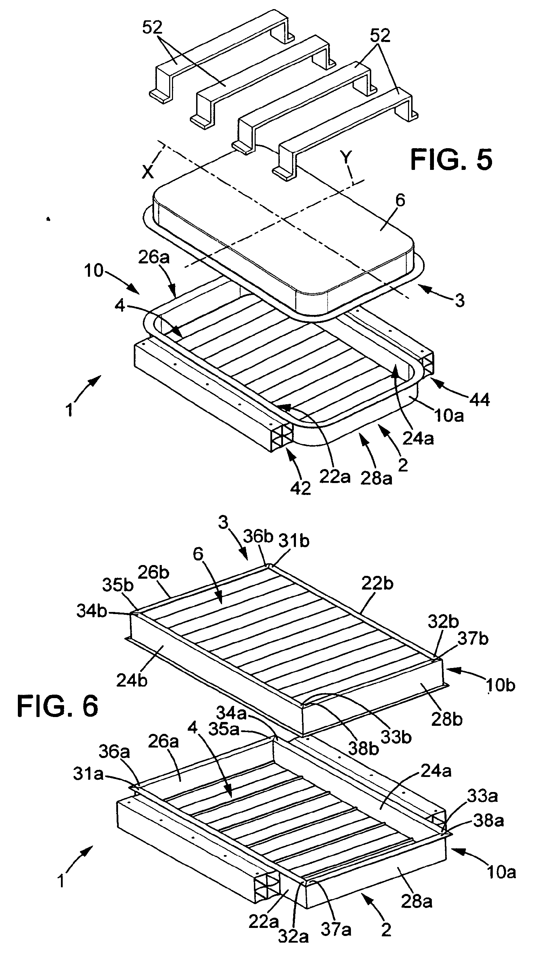

The third embodiment illustrated in figure 5 differs from the first embodiment illustrated in figures 2 and 3 in that the cover is deprived of the second profile. The bucket 2 and the side members 42, 44 of the third embodiment are identical to the ones of the first embodiment.

Otherwise, the cover 3 is made of a cast or stamped sheet in plastic or metal material, and the structural battery tray 1 further comprises metal cross members 52, four cross members in the embodiment illustrated. The cross members 52 extend along the lateral direction Y between the longitudinal portions 22a, 24a of the profile 10a to which they are fixed. In the embodiment illustrated the cross members 52 are disposed outside the housing 8. In an alternative embodiment, the cross members could be disposed in the housing 8.

The fourth embodiment illustrated in figure 6 differs from the first embodiment illustrated in figures 2 and 3 in that it does not constitute a single unit get from extrusion. Instead, each of the first profile 10a and second profile 10b is constituted of two longitudinal portions 22a, 24a ; 22b, 24b and two lateral portions 26a, 28a ; 26b, 28b cut and afterwards fixed together. Each of the longitudinal portions 22a ; 24a ; 22b ; 24b is rectilinear and cut between two opposed beveled ends 31a, 32a ; 33a, 34a ; 31b, 32b ; 33b, 34b. and each of the lateral portions 26a ; 28a ; 26b ; 28b is rectilinear and cut between two opposed beveled ends 35a, 36a ; 37a, 38a ; 35b, 36b ; 37b, 38b. The beveling angle is substantially 45 degrees. The beveled ends 35a, 36a, 37a, 38a ; 35b, 36b, 37b, 38b of the lateral portions are directly fixed to the beveled ends of the longitudinal portions respectively 34a, 31a, 32a, 33a ; 34b, 31b, 32b, 33b.

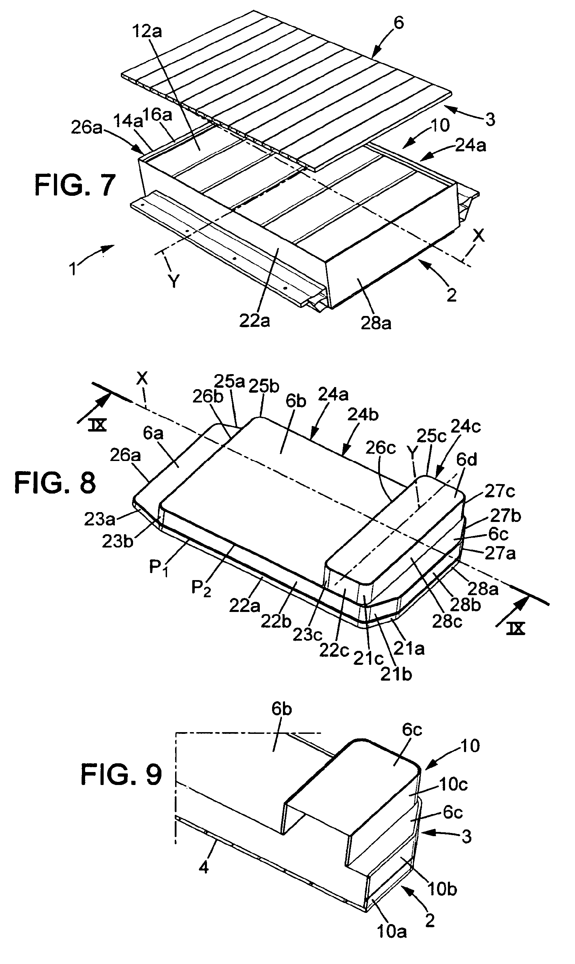

The fifth embodiment illustrated in figure 7 differs from the fourth embodiment illustrated in figure 6 in that the cover 3 is deprived of the second profile and only comprises the roof 6. Therefore, the frame 10 comprises only the profile 10a.

Moreover, the top wall 16a of the profile 10a extends only between the internal wall 12a and the external wall 14a whereas the external wall 14a extends beyond the top wall 16a and protrudes from the top wall 16a. Therefore, the roof 6 is supported by the top wall 16a and surrounded the protrusion of the external wall 14a.

The sixth embodiment illustrated in figure 8 differs from the first embodiment illustrated in figures 2 and 3 in that the intermediate portions 21a, 23a, 25a, 27a of the first profile 10a connecting the lateral rectilinear portions 26a, 28a with the longitudinal rectilinear portions 22a, 24a are not a simple quarter of circle.

Moreover, the cover 3 further has a third profile 10c comprising two rectilinear longitudinal portions 22c, 24c extending along the longitudinal direction X, two rectilinear lateral portions 26c, 28c extending along the lateral direction Y and intermediate portions 21c, 23c, 25c, 27c, having a quarter of circle shape. The frame 10 comprises the first profile 10a which is part of the bucket 2 and, the second profile 10b and the third profile 10c which are parts of the cover 3.

The longitudinal portions 22a, 24a of the first profile 10a and the longitudinal portions 22b, 24b of the second profile 10b are respectively superposed. The lateral portion 28a of the first profile 10a and the lateral portion 28b of the second profile are also superposed whereas the lateral portion 26b of the second profile 10b is shifted relative to the lateral portion 26a of the first profile 10a along the longitudinal direction X. The roof comprises four portions 6a, 6b, 6c, 6d. The portion 6a extends in a plane P₁ parallel to the floor 4 and extends between the lateral portion 26a of the first profile 10a and the lateral portion 26b of the second profile 10b along the longitudinal direction X. The first profile 10a and the second profile 10b are disposed on different sides of the plane P₁.

Moreover, the longitudinal portions 22b, 24b of the second profile 10b and the longitudinal portions 22c, 24c of the third profile 10c are respectively superposed whereas the lateral portions 26c, 28c of the third profile are respectively shifted relative to the lateral portions 26b, 28b of the second profile along the longitudinal direction X. The portions 6b and 6c of the roof extend in a plane P₂ parallel to the plane P₁. The portions 6b of the roof extends between the lateral portion 26b of the second profile 10b and the lateral portion 26c of the third profile 10c along the longitudinal direction X and the portions 6c of the roof extends between the lateral portion 28b of the second profile 10b and the lateral portion 28c of the third profile 10c along the longitudinal direction X. The second profile 10b and the third profile 10c extend on different sides of the plane P₂. The second profile 10b is between the plane P₁ and the plane P₂. The portions 6d of the roof extends in a plane parallel to floor 4 and is surrounded by the upper edge of the third profile 10c.

Of course, the invention is not limited to the above described embodiments. In particular, the cross section of the profile could be an open cross section. Therefore, instead of a rectangular shape, the cross section of the profile could be a substantially "C shape", a substantially "Ω" shape, a substantially "E shape", a substantially "Σ shape", a substantially "S shape", or the like. The external wall 14a, 14b, 14c could also comprise two portions (an upper portion and a lower portion) separated by a slit.

Moreover, it has been described a profile having four bent portions and another profile having four rectilinear parts fixed one to the other by their beveled ends. According to an alternative embodiment, the profile could comprise two parts, each having at least one beveled ends and at least one bent portion, the beveled ends fixing said two parts one to the other.

Furthermore, preferably the profiles, the floor, the roof and the side members are in aluminium. However in they could be in another material, such as steel.

Otherwise, the undersurface of the floor may be provided with an underbody sliding surface, as a ski, intended to come into contact with soil when the vehicle is running in extreme conditions.

## Claims

1. Battery tray (1) for vehicle (50) comprising a frame (10), a floor (4) and a roof (6), wherein the frame (10), the floor (4) and the roof (6) define a housing (8) adapted to receive batteries, said battery tray (1) being **characterised in that**:
- the frame (10) comprises a profile (10a) having a constant cross section, and
- the frame (10), the floor (4) and the roof (6) are three separate elements secured to each other.

2. Battery tray (1) according to claim 1 wherein the profile (10a) comprises an internal wall (12a) delimiting the housing (8), a top wall (16a) and a bottom wall (18a).

3. Battery tray (1) according to the preceding claim further comprising an external wall (14a) opposite the internal wall (12a), the internal wall (12a) and the external wall (14a) being spaced apart from each other, wherein:
- each of the internal wall (12a) and the external wall (14a) has a top edge (11a, 13a) and a bottom edge (15a, 17a),
- the top edge (11a) of the internal wall (12a) and the top edge (13a) of the external wall (14a) are connected by the top wall (16a),
- the bottom edge (15a) of the internal wall (12a) and the bottom edge (17a) of the external wall (14a) are connected by the bottom wall (18a).

4. Battery tray (1) according to the preceding claim wherein the internal wall (12a) and the external wall (14a) of the profile (10a) are further connected by at least one cross plate (19a) extending parallel to the top wall (16) and the bottom wall (18).

5. Battery tray (1) according to any of the preceding claims wherein the profile (10a) has a closed cross section.

6. Battery tray (1) according to any of the preceding claims wherein the profile (10a, 10b ,10c) comprises at least one bent portion (21a, 23a, 25a, 27a ; 21b, 23b, 25b, 27b ; 21c, 23c, 25c, 27c).

7. Battery tray (1) according to the preceding claim wherein the profile (10a, 10b) is made of a single unit and has a first end (20a, 20b) and a second end (30a, 30b) fixed one to the other.

8. Battery tray (1) according to any of the claims 1 to 6 wherein the profile (10a) comprises at least two portions (21a, 23a, 25a, 27a) each portion has at least one bevelled end (31a, 32a ; 33a, 34a ; 35a, 36a ; 37a, 38a), said bevelled ends (31a, 32a ; 33a, 34a ; 35a, 36a ; 37a, 38a) being directly fixed one to the other.

9. Battery tray (1) according to any of the preceding claims wherein the profile (10a) comprises:
- two rectilinear longitudinal portions (22a, 24a) extending in a longitudinal direction (X), and
- two lateral portions (26a, 28a) extending between the longitudinal portions (22a, 24a).

10. battery tray (1) according to the preceding claim further comprising cross members (52) extending between the longitudinal portions (22a, 24a) of the profile (10a).

11. Battery tray (1) according to any of the preceding claims wherein:
- said profile defines a first profile (10a) and the frame (10) further comprises a second profile (10b) of substantially constant cross section, and
- the first profile (10a) and the second profile (10b) are entirely superposed one on the other.

12. Battery tray (1) according to any of the claims 1 to 10 wherein:
- said profile defines a first profile (10a) and the frame (10) further comprises a second profile (10b) of substantially constant cross section,
- the first profile (10a) and the second profile (10b) are disposed on different sides of a junction plane (P₁, P₂),
- the roof (6) comprises a first portion (6a) extending between the two profiles (10a, 10b) in the junction plane (P₁) and a second portion (6b) extending in an upper plane (P₂) parallel to the junction plane (P₁),
- the second profile (10b) is disposed between the upper plane (P₂) and the junction plane (P₁).

13. Battery tray (1) according to the preceding claim wherein:
- the first profile (10a) comprises a first rectilinear longitudinal portion (22a) and a second rectilinear longitudinal portion (24a) both extending in a longitudinal direction (X) and, a first lateral portion (26a) and a second lateral portion (28a) connecting the longitudinal portions (22a, 24a),
- the second profile (10b) comprises a first rectilinear longitudinal portion (22a) and a second rectilinear longitudinal portion (22b) both extending in the longitudinal direction (X), and two lateral portions (26b, 28b) connecting the longitudinal portions (22b, 24b),
- the first longitudinal portion (22a) of the first profile (10a) and the first longitudinal portion (22b) of the second profile (10b) are superposed and fixed to each other,
- the second longitudinal portion (24a) of the first profile (10a) and the second longitudinal portion (24b) of the second profile (10b) are superposed and fixed to each other,
- the first lateral portion (26b) of the second profile (10b) is spaced apart from the first lateral portion (26a) of the first profile (10a) and the first portion (6a) of the roof (6) extends between the first lateral portion (26a) of the first profile (10a) and the first lateral portion (26b) of the second profile (10b).

14. Battery tray (1) according to any of the preceding claims comprising:
- a bucket (2) including the profile (10a) and the floor (4), the profile (10a) comprising a first peripheral junction flange (16a), and
- a cover (3) including the roof (6), the cover (3) comprising a second peripheral junction flange (16b), the first peripheral junction flange (16a) and the second peripheral junction flange (16b) being sealingly connected together.

15. Battery tray (1) according to any of the preceding claims wherein the floor (4) comprises an internal wall (4a) and an external wall (4b) spaced apart from each other and fixed to each other at a plurality of locations (4d) spaced from the periphery of the internal wall (4a) and from the periphery of the external wall (4b).

16. Battery tray (1) according to the preceding claim wherein the floor (4) comprises a plurality of hollow battens (7) assembled side by side.

17. Battery tray (1) according to any of the preceding claims wherein the floor (4) has an external surface (4c) which is flat.

18. Battery tray (1) according to any of the preceding claims wherein the frame (10) is in aluminium.

19. Battery tray (1) according to any of the preceding claims wherein the housing (8) defined by the frame (10), the floor (4) and the roof (6) is watertight.

20. Assembly (40) comprising a battery tray (1) according to any of the preceding claims and batteries (46) disposed in the housing (8) of the battery tray (1).

21. Vehicle (50) comprising a battery tray (1) according to any of the claims 1 to 19, a structure (48) and two extruded hollow side members (42, 44) having a constant cross section adapted to absorb energy in case of crash, and the battery tray (1) is fixed to the structure (48) of the vehicle through the side members (42, 44).

22. Method for producing a battery tray (1) for vehicle (50) comprising the following steps:
a) producing a profile (10a) having a substantially constant cross section,
b) achieving a frame (10) with this profile (10a),
c) producing a separate floor (4) and a separate roof (6),
d) producing a housing (8) delimited by the floor (4), the roof (6) and the profile (10a).

23. Method according to claim 22 wherein:
- during step a) the profile (10a) is cut at a first end (20a) and a second end (30a), and
- during step b) the profile (10a) is bent to create a single unit of closed shape and, the first end (20a) and the second end (30a) are fixed one to the other.

24. Method according to claim 22 wherein:
- during step a) two rectilinear longitudinal portions (22a, 24a) and two lateral portions (26a, 28a) having bevelled ends (31a, 32a, 33a, 34a, 35a, 36a, 37a, 38a) are cut, and
- during step b) the bevelled ends (31a, 32a, 33a, 34a, 35a, 36a, 37a, 38a) of the lateral portions (26a, 28a) are fixed with the bevelled ends (31a, 32a, 33a, 34a) of the longitudinal portions (22a, 24a).

## Patentansprüche

1. Batteriefach (1) für ein Fahrzeug (50), umfassend einen Rahmen (10), einen Boden (4) und ein Dach (6), wobei der Rahmen (10), der Boden (4) und das Dach (6) ein Gehäuse (8) definieren, das zum Aufnehmen von Batterien konzipiert ist, wobei das Batteriefach (1) durch Folgendes gekennzeichnet ist:
- der Rahmen (10) umfasst ein Profil (10a), das einen konstanten Querschnitt aufweist; und
- der Rahmen (10), der Boden (4) und das Dach (6) sind drei separate Elemente, die aneinander befestigt sind.

2. Batteriefach (1) nach Anspruch 1, wobei das Profil (10a) eine Innenwand (12a) umfasst, die das Gehäuse (8) begrenzt, eine obere Wand (16a) und eine untere Wand (18a) begrenzt.

3. Batteriefach (1) nach dem vorherigen Anspruch, ferner umfassend eine Außenwand (14a) gegenüber der Innenwand (12a), wobei die Innenwand (12a) und die Außenwand (14a) voneinander beabstandet sind, wobei:
- sowohl die Innenwand (12a) als auch die Außenwand (14a) einen oberen Rand (11a, 13a) und einen unteren Rand (15a, 17a) aufweisen,
- der obere Rand (11a) der Innenwand (12a) und der obere Rand (13a) der Außenwand (14a) durch die obere Wand (16a) verbunden sind,
- der untere Rand (15a) der Innenwand (12a) und der untere Rand (17a) der Außenwand (14a) durch die untere Wand (18a) verbunden sind.

4. Batteriefach (1) nach dem vorherigen Anspruch, wobei die Innenwand (12a) und die Außenwand (14a) des Profils (10a) ferner durch mindestens eine Kreuzplatte (19a) verbunden sind, die sich parallel zu der oberen Wand (16) und der unteren Wand (18) erstreckt.

5. Batteriefach (1) nach einem der vorherigen Ansprüche, wobei das Profil (10a) einen geschlossenen Querschnitt aufweist.

6. Batteriefach (1) nach einem der vorherigen Ansprüche, wobei das Profil (10a, 10b ,10c) mindestens einen gekrümmten Abschnitt (21a, 23a, 25a, 27a; 21b, 23b, 25b, 27b; 21c, 23c, 25c, 27c) aufweist.

7. Batteriefach (1) nach dem vorherigen Anspruch, wobei das Profil (10a, 10b) aus einer einzelnen Einheit hergestellt ist und ein erstes Ende (20a, 20b) und ein zweites Ende (30a, 30b) aufweist, die miteinander befestigt sind.

8. Batteriefach (1) nach einem der Ansprüche 1 bis 6, wobei das Profil (10a) mindestens zwei Abschnitte (21a, 23a, 25a, 27a) umfasst, wobei jeder Abschnitt mindestens ein abgeschrägtes Ende (31a, 32a ; 33a, 34a; 35a, 36a ; 37a, 38a) aufweist, wobei die abgeschrägten Enden (31a, 32a ; 33a, 34a ; 35a, 36a ; 37a, 38a) direkt miteinander befestigt sind.

9. Batteriefach (1) nach einem der vorherigen Ansprüche, wobei das Profil (10a) Folgendes umfasst:
- zwei geradlinige Längsabschnitte (22a, 24a), die sich in einer Längsrichtung (X) erstrecken, und
- zwei seitliche Abschnitte (26a, 28a), die sich zwischen den Längsabschnitten (22a, 24a) erstrecken.

10. Batteriefach (1) nach dem vorherigen Anspruch, ferner umfassend Kreuzelemente (52), die sich zwischen den Längsabschnitten (22a, 24a) des Profils (10a) erstrecken.

11. Batteriefach (1) nach einem der vorherigen Ansprüche, wobei
- das Profil ein erstes Profil (10a) definiert und der Rahmen (10) ferner ein zweites Profil (10b) aus einem im Wesentlichen konstanten Querschnitt umfasst, und
- das erste Profil (10a) und das zweite Profil (10b) vollständig voneinander überlagert sind.

12. Batteriefach (1) nach einem der Ansprüche 1 bis 10, wobei
- das Profil ein erstes Profil (10a) definiert und der Rahmen (10) ferner ein zweites Profil (10b) aus einem im Wesentlichen konstanten Querschnitt umfasst,
- das erste Profil (10a) und das zweite Profil (10b) auf verschiedenen Seiten der Verbindungsebene (Pl, P2) angeordnet sind,
- das Dach (6) einen ersten Abschnitt (6a) umfasst, der sich zwischen den zwei Profilen (10a, 10b) in der Verbindungsebene (P1) erstreckt, und einen zweiten Abschnitt (6b), der sich auf einer oberen Ebene (P2) erstreckt, die parallel zu der Verbindungsebene (P1) ist,
- das zweite Profil (10b) zwischen der oberen Ebene (P2) und der Verbindungsebene (P1) angeordnet ist.

13. Batteriefach (1) nach dem vorherigen Anspruch, wobei
- das erste Profil (10a) einen ersten geradlinigen Längsabschnitt (22a) und einen zweiten geradlinigen Längsabschnitt (24a) umfasst, die sich beide in eine Längsrichtung (X) erstrecken, und einen ersten seitlichen Abschnitt (26a) und einen zweiten seitlichen Abschnitt (28a), welche die Längsabschnitte (22a, 24a) verbinden,
- das zweite Profil (10b) einen ersten geradlinigen Längsabschnitt (22a) und einen zweiten geradlinigen Längsabschnitt (22b) umfasst, die sich beide in die Längsrichtung (X) erstrecken, sowie zwei seitliche Abschnitte (26b, 28b), welche die Längsabschnitte (22b, 24b) verbinden,
- der erste Längsabschnitt (22a) des ersten Profils (10a) und der erste Längsabschnitt (22b) des zweiten Profils (10b) sich überlagern und aneinander befestigt sind,
- der zweite Längsabschnitt (24a) des ersten Profils (10a) und der zweite Längsabschnitt (24b) des zweiten Profils (10b) sich überlagern und aneinander befestigt sind,
- der erste seitliche Abschnitt (26b) des zweiten Profils (10b) von dem ersten seitlichen Abschnitt (26a) des ersten Profils (10a) beabstandet ist und der erste Abschnitt (6a) des Dachs (6) sich zwischen dem ersten seitlichen Abschnitt (26a) des ersten Profils (10a) und dem ersten seitlichen Abschnitt (26b) des zweiten Profils (10b) erstreckt.

14. Batteriefach (1) nach einem der vorherigen Ansprüche, umfassend:
- einen Kübel (2), der ein Profil (10a) und den Boden (4) aufweist, wobei das Profil (10a) einen ersten Umfangsverbindungsflansch (16a) umfasst und
- eine Abdeckung (3), die das Dach (6) aufweist, wobei die Abdeckung (3) einen zweiten Umfangsverbindungsflansch (16b) umfasst, wobei der erste Umfangsverbindungsflansch (16a) und der zweite Umfangsverbindungsflansch (16b) dicht miteinander verbunden sind.

15. Batteriefach (1) nach einem der vorherigen Ansprüche, wobei der Boden (4) eine Innenwand (4a) und eine Außenwand (4b) umfasst, die voneinander beabstandet und an mehreren Stellen (4d), die von dem Umfang der Innenwand (4a) und von dem Umfang der Außenwand (4b) beabstandet sind, aneinander befestigt sind.

16. Batteriefach (1) nach dem vorherigen Anspruch, wobei der Boden (4) mehrere hohle Leisten (7) umfasst, die Seite an Seite montiert sind.

17. Batteriefach (1) nach einem der vorherigen Ansprüche, wobei der Boden (4) eine Außenoberfläche (4c) aufweist, die flach ist.

18. Batteriefach (1) nach einem der vorherigen Ansprüche, wobei der Rahmen (10) aus Aluminium ist.

19. Batteriefach (1) nach einem der vorherigen Ansprüche, wobei das Gehäuse (8), das von dem Rahmen (10), dem Boden (4) und dem Dach (6) definiert ist, wasserdicht ist.

20. Anordnung (40), umfassend ein Batteriefach (1) nach einem der vorherigen Ansprüche und Batterien (46), die in dem Gehäuse (8) des Batteriefachs (1) angeordnet sind.

21. Fahrzeug (50), umfassend ein Batteriefach (1) nach einem der Ansprüche 1 bis 19, eine Struktur (48) und zwei stranggepresste hohle Seitenelemente (42, 44), die einen konstanten Querschnitt aufweisen, die zum Aufnehmen von Energie im Falle eines Unfalls konzipiert sind, und wobei das Batteriefach (1) an der Struktur (48) des Fahrzeugs über die Seitenelemente (42, 44) befestigt ist.

22. Verfahren zum Herstellen eines Batteriefachs (1) für ein Fahrzeug (50), wobei das Verfahren die folgenden Schritte umfasst:
a) Herstellen eines Profils (10a), das einen im Wesentlichen konstanten Querschnitt aufweist,
b) Erhalten eines Rahmens (10) mit diesem Profil (10a),
c) Herstellen eines separaten Bodens (4) und eines separaten Dachs (6),
d) Herstellen eines Gehäuses (8), das von dem Boden (4), dem Dach (6) und dem Profil (10a) begrenzt wird.

23. Verfahren nach Anspruch 22, wobei
- bei Schritt a) das Profil (10a) an einem ersten Ende (20a) und einem zweiten Ende (30a) geschnitten wird und
- bei Schritt b) das Profil (10a) gebogen wird, um eine einzelne Einheit geschlossener Form zu erzeugen, und das erste Ende (20a) und das zweite Ende (30a) aneinander befestigt werden.

24. Verfahren nach Anspruch 22, wobei
- bei Schritt a) zwei geradlinige Längsabschnitte (22a, 24a) und zwei seitliche Abschnitte (26a, 28a), die abgeschrägte Enden (31a, 32a, 33a, 34a, 35a, 36a, 37a, 38a) aufweisen, geschnitten werden und
- bei Schritt b) die abgeschrägten Enden (31a, 32a, 33a, 34a, 35a, 36a, 37a, 38a) der seitlichen Abschnitte (26a, 28a) an den abgeschrägten Enden (31a, 32a, 33a, 34a) der Längsabschnitte (22a, 24a) befestigt werden.

## Revendications

1. Support de batteries (1) pour véhicule (50) comprenant un cadre (10), un plancher (4) et un toit (6), dans lequel le cadre (10), le plancher (4) et le toit (6) définissent un logement (8) adaptés pour recevoir des batteries, ledit support de batteries (1) étant **caractérisé en ce que** :
- le cadre (10) comprend un profilé (10a) possédant une section transversale constante, et
- le cadre (10), le plancher (4) et le toit (6) sont trois éléments séparés fixés les uns aux autres.

2. Support de batteries (1) selon la revendication 1, dans lequel le profilé (10a) comprend une paroi interne (12a) délimitant le logement (8), une paroi supérieure (16a) et une paroi inférieure (18a).

3. Support de batteries (1) selon la revendication précédente, comprenant en outre une paroi externe (14a) en regard de la paroi interne (12a), la paroi interne (12a) et la paroi externe (14a) étant espacées l'une de l'autre, dans lequel :
- chacune de la paroi interne (12a) et de la paroi externe (14a) possède un bord supérieur (11a, 13a) et un bord inférieur (15a, 17a),
- le bord supérieur (11a) de la paroi interne (12a) et le bord supérieur (13a) de la paroi externe (14a) sont reliés par la paroi supérieure (16a),
- le bord inférieur (15a) de la paroi interne (12a) et le bord inférieur (17a) de la paroi externe (14a) sont reliés par la paroi inférieure (18a).

4. Support de batteries (1) selon la revendication précédente, dans lequel la paroi interne (12a) et la paroi externe (14a) du profilé (10a) sont en outre reliées par au moins une plaque transversale (19a) s'étendant parallèlement à la paroi supérieure (16) et à la paroi inférieure (18).

5. Support de batteries (1) selon une quelconque des revendications précédentes dans lequel le profilé (10a) possède une section transversale fermée.

6. Support de batteries (1) selon une quelconque des revendications précédentes, dans lequel le profilé (10a, 10b, 10c) comprend au moins une partie cintrée (21a, 23a, 25a, 27a ; 21b, 23b, 25b, 27b ; 21c, 23c, 25c, 27c).

7. Support de batteries (1) selon la revendication précédente, dans lequel le profilé (10a, 10b) est fait d'une seule unité et possède une première extrémité (20a, 20b) et une seconde extrémité (30a, 30b) fixées l'une à l'autre.

8. Support de batteries (1) selon une quelconque des revendications 1 à 6, dans lequel le profilé (10a) comprend au moins deux parties (21a, 23a, 25a, 27a), chaque partie possédant au moins une extrémité biseautée (31a, 32a ; 33a, 34a ; 35a, 36a ; 37a, 38a), lesdites extrémités biseautées (31a, 32a ; 33a, 34a ; 35a, 36a ; 37a, 38a) étant directement fixées l'une à l'autre.

9. Support de batteries (1) selon une quelconque des revendications précédentes dans lequel le profilé (10a) comprend :
- deux parties longitudinales rectilignes (22a, 24a) s'étendant dans une direction longitudinale (X), et
- deux parties latérales (26a, 28a) s'étendant entre les parties longitudinales (22a, 24a).

10. Support de batteries (1) selon la revendication précédente, comprenant en outre des éléments transversaux (52) s'étendant entre les parties longitudinales (22a, 24a) du profilé (10a).

11. Support de batteries (1) selon une quelconque des revendications précédentes dans lequel :
- ledit profilé définit un premier profilé (10a) et le cadre (10) comprend en outre un second profilé (10b) de section transversale sensiblement constante, et
- le premier profilé (10a) et le second profilé (10b) sont entièrement superposés l'un sur l'autre.

12. Support de batteries (1) selon une quelconque des revendications 1 à 10, dans lequel :
- ledit profilé définit un premier profilé (10a) et le cadre (10) comprend en outre un second profilé (10b) de section transversale sensiblement constante,
- le premier profilé (10a) et le second profilé (10b) sont disposés de part et d'autre d'un plan de jonction (P₁, P₂),
- le toit (6) comprend une première partie (6a) s'étendant entre les deux profilés (10a, 10b) dans le plan de jonction (P₁) et une seconde partie (6b) s'étendant dans un plan supérieur (P₂) parallèle au plan de jonction (P₁),
- le second profilé (10b) est disposé entre le plan supérieur (P₂) et le plan de jonction (P₁).

13. Support de batteries (1) selon la revendication précédente, dans lequel :
- le premier profilé (10a) comprend une première partie longitudinale rectiligne (22a) et une seconde partie longitudinale rectiligne (24a), les deux s'étendant dans une direction longitudinale (X), et une première partie latérale (26a) et une seconde partie latérale (28a) reliant les parties longitudinales (22a, 24a),
- le second profilé (10b) comprend une première partie longitudinale rectiligne (22a) et une seconde partie longitudinale rectiligne (22b) s'étendant tous les deux dans la direction longitudinale (X), et deux parties latérales (26b, 28b) reliant les parties longitudinales (22b, 24b),
- la première partie longitudinale (22a) du premier profilé (10a) et la première partie longitudinale (22b) du second profilé (10b) sont superposées et fixées l'une à l'autre,
- la seconde partie longitudinale (24a) du premier profilé (10a) et la seconde partie longitudinale (24b) du second profilé (10b) sont superposées et fixées l'une à l'autre,
- la première partie latérale (26b) du second profilé (10b) est espacée de la première partie latérale (26a) du premier profilé (10a et la première partie (6a) du toit (6) s'étend entre la première partie latérale (26a) du premier profilé (10a) et la première partie latérale (26b) du second profilé (10b).

14. Support de batteries (1) selon une quelconque des revendications précédentes, comprenant :
- un baquet (2) comprenant le profilé (10a) et le plancher (4), le profilé (10a) comprenant un premier rebord de jonction périphérique (16a), et
- un couvercle (3) comprenant le toit (6), le couvercle (3) comprenant un second rebord de jonction périphérique (16b), le premier rebord de jonction périphérique (16a) et le second rebord de jonction périphérique (16b) étant reliés ensemble de façon étanche.

15. Support de batteries (1) selon une quelconque des revendications précédentes, dans lequel le plancher (4) comprend une paroi interne (4a) et une paroi externe (4b) espacées l'une de l'autre et fixées l'une à l'autre à une pluralité d'emplacements (4d) espacés de la périphérie de la paroi interne (4a) et de la périphérie de la paroi externe (4b).

16. Support de batteries (1) selon la revendication précédente, dans lequel le plancher (4) comprend une pluralité de lattes creuses (7) assemblées côte à côte.

17. Support de batteries (1) selon une quelconque des revendications précédentes, dans lequel le plancher (4) possède une surface externe (4c) qui est plate.

18. Support de batteries (1) selon une quelconque des revendications précédentes, dans lequel le cadre (10) est en aluminium.

19. Support de batteries (1) selon une quelconque des revendications précédentes, dans lequel le logement (8) défini par le cadre (10), le plancher (4) et le toit (6) est étanche à l'eau.

20. Ensemble (40), comprenant un support de batteries (1) selon une quelconque des revendications précédentes et des batteries (46) disposées dans le logement (8) du support de batteries (1).

21. Véhicule (50) comprenant un support de batteries (1) selon une quelconque des revendications 1 à 19, une structure (48) et deux éléments latéraux creux extrudés (42, 44) possédant une section transversale constante adaptée pour absorber de l'énergie en cas de collision, et le support de batteries (1) est fixé à la structure (48) du véhicule par l'intermédiaire des éléments latéraux (42, 44).

22. Procédé pour fabrication d'un support de batteries (1) pour véhicule (50), comprenant les étapes suivantes :
a) la fabrication d'un profilé (10a) possédant une section transversale sensiblement constante,
b) la réalisation d'un cadre (10) avec ce profilé (10a),
c) la fabrication d'un plancher séparé (4) et d'un toit séparé (6),
d) la fabrication d'un logement (8) délimité par le plancher (4), le toit (6) et le profilé (10a).

23. Procédé selon la revendication 22, dans lequel :
- durant l'étape a), le profilé (10a) est coupé à une première extrémité (20a) et à une seconde extrémité (30a), et
- durant l'étape b), le profilé (10a) est cintré pour créer une seule unité de forme fermée, et la première extrémité (20a) et la seconde extrémité (30a) sont fixées l'une à l'autre.

24. Procédé selon la revendication 22, dans lequel :
- durant l'étape a), deux parties longitudinales rectilignes (22a, 24a) et deux parties latérales (26a, 28a) possédant des extrémités biseautées (31a, 32a, 33a, 34a, 35a, 36a, 37a, 38a) sont coupées, et
- durant l'étape b), les extrémités biseautées (31a, 32a, 33a, 34a, 35a, 36a, 37a, 38a) des parties latérales (26a, 28a) sont fixées avec les extrémités biseautées (31a, 32a, 33a, 34a) des parties longitudinales (22a, 24a).
